# EUROPÄISCHE PATENTSCHRIFT

(11) **EP 1 133 039 B1**
(45) Veröffentlichungstag und Bekanntmachung des Hinweises auf die Patenterteilung: **20.01.2010**
(21) Anmeldenummer: 01104546.5
(22) Anmeldetag: 05.03.2001
(51) Int. Cl.: H02G 3/30

(54) **Kabelhalter zur Befestigung von Kabeln in Fahrzeugen**
Cable support for fixation of cables in vehicles
Support de câbles pour la fixation dans des véhicules

(30) Priorität: 06.03.2000 DE 10010934
(43) Veröffentlichungstag der Anmeldung: 12.09.2001
(73) Patentinhaber: EADS Deutschland GmbH, 81663 München (DE)
(72) Erfinder: Koziol, Siegmund, 85664 Hohenlinden (DE)

(56) Entgegenhaltungen:
- WO-A-99/10957
- DE-U- 1 896 156
- JP-A- 08 018 253

## Beschreibung

Die Erfindung betrifft einen Kabelhalter zur Befestigung von Kabeln in Fahrzeugen.

Ein Kabelhalter mit den Merkmalen des Oberbegriffs des Anspruchs 1 ist aus JP 08 018 253 A bekannt.

Aus der DE-GM 18 96 156, der DE-PS 675 892 und der DE 93 17 299 U1 sind Kabelhalter zu Befestigung von Kabeln bekannt, die einstückig gestaltet sind und in einem Abschnitt parallel zueinander angeordnete Schlitze aufweisen. Die EP 0 718 946 A1 offenbart einen plattenförmigen Kabelhalter, der über seine gesamte Oberfläche in regelmäßigen Abständen angeordnete Bohrungen aufweist.

Es ist die Aufgabe der Erfindung, einen Kabelhalter zur Anbringung an Fahrzeugstrukturen zu schaffen, der auch bei der Montage an schwerzugänglichen Stellen möglichst einfach montierbar ist und mit einfachem Mittel ausreichend stabil anbringbar ist.

Diese Aufgabe wird mit den Merkmalen des Anspruchs 1 gelöst. Weitere Ausführungsformen sind in den Unteransprüchen angegeben.

Ein Vorteil der Erfindung ist, daß der Kabelhalter auf einfachste Weise in eine vorbestimmte Länge gebracht werden kann und mit einfachen Mitteln auf eine entsprechende Auflagefläche der Fahrzeugstruktur befestigt werden kann. Auch ist mit dem Kabelhalter der Erfindung eine große Packungsdichte bei der Anbringung von Kabeln mittels Kabelbinder auf den Kabelhalter erreichbar. Dabei ist das zu dessen Herstellung verwendete Material sehr robust, verhältnismäßig leicht und kostengünstig in der Herstellung.

Im folgenden wird die Erfindung anhand der beigefügten Figuren beschrieben, die zeigen:
- Fig. 1 eine perspektivische Darstellung des erfindungsgemäßen Kabelhalters in einer ersten Ausführungsform mit daran befestigten Kabeln, wobei der Kabelhalter im wesentlichen die Form einer ebenen Platte hat,
- Fig. 2 eine zweite Ausführungsform des erfindungsgemäßen Kabelhalters in perspektivischer Darstellung mit daran befestigten Kabeln , wobei der Kabelhalter im wesentlichen die Form eines z-Profils aufweist,
- Fig. 3 eine dritte Ausführungsform des erfindungsgemäßen Kabelhalters in perspektivischer Darstellung mit daran befestigten Kabeln, wobei der Kabelhalter im wesentlichen die Form eines Winkelprofils aufweist.

Der erfindungsgemäße Kabelhalter 1 stellt eine längliche Halterung 3 dar, die sich in Längsrichtung 4 erstreckt, eine Platte oder ein Profil sein kann und eine Oberseite 5 sowie eine Unterseite 7 aufweist. Auf den Kabelhalter 1 sind eine Mehrzahl von Kabeln 10 mittels Kabelbindern 10a nach dem Stand der Technik befestigbar. Die Platte 3 ist einstückig gebildet und kann funktional in einen ersten Abschnitt 11 zur Befestigung der Kabel 10 und in einen zweiten Abschnitt 12 geteilt werden, der zur Befestigung der Platte auf einer entsprechenden Auflagefläche in der Fahrzeugstruktur dienen kann, wobei der erste 11 und der zweite Abschnitt 12 jeweils in Längsrichtung verlaufen und quer zur Längsrichtung nebeneinander angeordnet sind. Der Kabelhalter 1 kann als Platte 1a, als Z-Profil 1b oder als Winkelhalter 1c ausgeführt sein.

Der erste Abschnitt 11 ist entlang der Längsrichtung 4 gesehen mit den regelmäßig den Abständen angeordneten Schlitzen 13 versehen, die quer zur Längsrichtung 5 verlaufen und parallel zueinander angeordnet sind.

Die Schlitze 13 dienen dazu, Kabelbinder 15 nach dem Stand der Technik durchzuführen, um ein entsprechendes Kabel 10 an dem Kabelhalter 1 zu befestigen. Der zweite Abschnitt 12 kann mit entlang der Längsrichtung 4 in regelmäßigen Abständen angeordneten Bohrungen 17 versehen sein, um den Kabelhalter 1 an der Struktur des Fahrzeugs mittels Verbindungselementen zu befestigen. Als Verbindungselemente kommen dabei insbesondere Schrauben und Muttern in Betracht. Der Kabelhalter kann jedoch auch auf einer entsprechenden Auflagefläche de Fahrzeugstruktur aufgeklebt sein. Die Breite sowohl des erstens 11 als auch des zweiten 12 Abschnitts beträgt zwischen 20 und 25 mm, wobei die gesamte Breite des Kabelhalters 1 im Bereich zwischen 42 und 48 mm vorzugsweise 45 mm liegt.

An zumindest einer der Längseiten 18,19 des Kabelhalters 1 sind in regelmäßigen Abständen Markierungen 16 zum Ablängen des Kabelhalters 1 vorgesehen. Diese Markierungen können die Form einer Kerbe haben.

Die Schlitze 13 sind jeweils 10 bis 18 mm und vorzugsweise 15 mm lang sowie zwischen 4 und 6 mm und vorzugsweise 5 mm breit. Ihr regelmäßiger Abstand zueinander beträgt zwischen 7 und 12 mm und liegt vorzugsweise bei 7 mm.

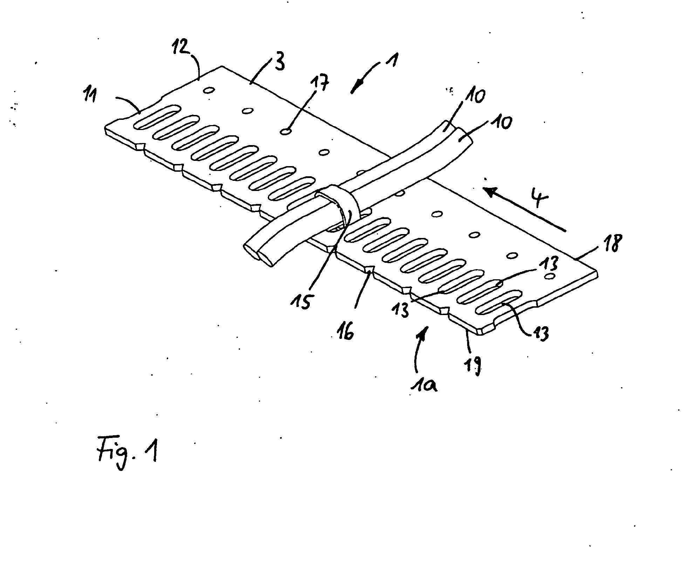

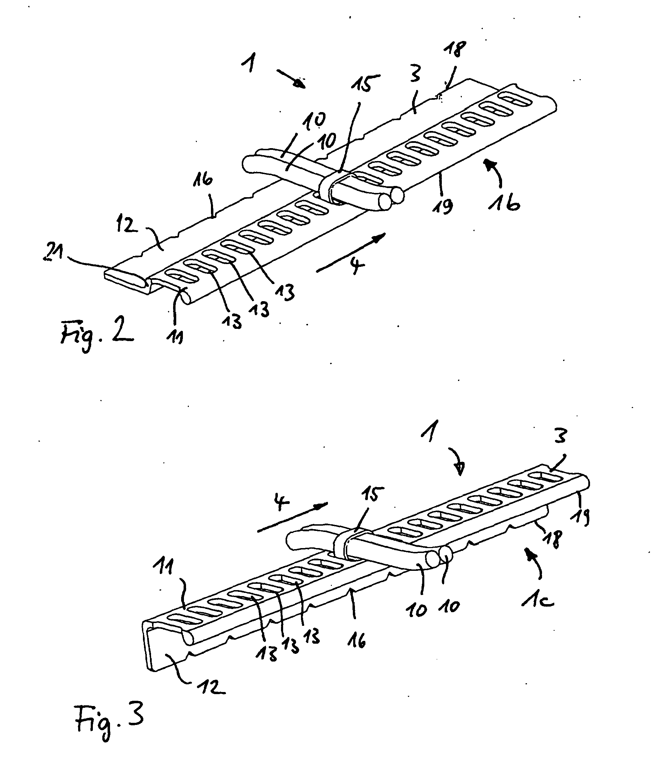

Bei der zweiten Ausführungsform des Kabelhalters 1 nach der Figur 2 ist der Kabelhalter 1 nicht als ebene Platte, sondern in Form eines Z-Profils 1b ausgebildet, d.h. der Kabelhalter 1 weist eine in Längsrichtung 5 verlaufende Abstufung oder einen Steg 21 auf. Die Höhe des Stegs hängt vom Anwendungsfall ab. Vorzugsweise sind die Markierungen 16 an der freien Längseite 18 des Seitenabschnitts 12 vorgesehen. Die Schlitze 13 weisen die anhand der Ausführungsform nach der Figur 1 beschriebene Gestaltung auf.

In der dritten Ausführungsform des erfindungsgemäßen Kabelhalters 1 nach der Figur 3 ist der Kabelhalter 1 in Form eines Winkelhalters 1c ausgestaltet, d.h. der erste Abschnitt 11 mit den Schlitzen 13 ist winklig zu dem zweiten Abschnitt 12 angeordnet. Der Winkel beträgt vorzugsweise 90°, kann jedoch je nach Anwendungsfall auch davon verschieden sein. An der freien Längseite 19 des zweiten Abschnitts 12 sind die Markierungen 16 vorgesehen. Die Breiten des ersten 11 und des zweiten 12 Abschnitts des Winkelhalters 1c sind wie bei den anderen beiden beschriebenen Ausführungsformen.

Bei der Figuren 1 bis 3 haben die Bestandteile gleicher Funktion dieselben Bezugszeichen.

Das Material des erfindungsgemäßen Kabelhalters 1 ist Polyetheretherketon. Dieses Material kann auch mit 10 bis 30 Masse% Glasfasern versehen sein, wobei vorzugsweise 30 Masse-% Glasfasern vorgesehen sind. Das verwendete Material hat den Vorteil, daß mit diesem der erfindungsgemäße Kabelhalter 1 leicht herstellbar ist und eine ausreichende Festigkeit und Belastbarkeit für die Anwendung im Fahrzeugbau und insbesondere im Flugzeugbau gewährleistet. Dabei ist insbesondere auch eine Beständigkeit gegenüber einer Vielzahl agressiver Flüssigkeiten gegeben.

Die Bohrungen 17 (nicht gezeigt in Fig. 2 und 3) sind in einem regelmäßigen Abstand von zwischen 10 und 30 mm und insbesondere von 18 mm auf den zweiten Abschnitt 12 eingebracht. Generell kann der Abstand der Bohrungen 17 jedoch von der Auflagefläche der Fahrzeugstruktur abhängen, auf die der Kabelhalter 1 anzubringen ist. Der Kabelhalter 1 kann alternativ auch auf eine vorgesehene Auflagefläche der Fahrzeugstruktur aufgeklebt werden. Als Klebstoff wird dabei ein Zwei-Komponenten-Polyurethan-Elastomer-Klebstoff verwendet.

## Patentansprüche

1. Kabelhalter zur Befestigung von Kabeln (10) mittels Kabelbinder (15), der einstückig ausgestaltet ist und nebeneinander einen ersten Abschnitt (11) und einen zweiten Abschnitt (12) aufweist, die jeweils in Längsrichtung (4) des Kabelhalters (1) verlaufen, wobei der erste Abschnitt (11) quer zur Längsrichtung (4) verlaufende und parallel zu einander angeordnete Schlitze (13) aufweist, wobei der Abstand der Schlitze (13) zueinander gleichmäßig ist und wobei zumindest eine der Längsseiten (18, 19) des Kabelhalters (1) mit in regelmäßigen Abständen versehenen Markierungen (16) zur Ablängung des Kabelhalters (1) aufweist
**dadurch gekennzeichnet,**
**daß** der Kabelhalter aus Polyetheretherketon gebildet ist,daß die Schlitze (13) eine Länge zwischen 10 und 18 mm und eine Breite zwischen 4 und 6 mm besitzen, wobei der Abstand der Schlitze (13) zwischen 7 und 12 mm beträgt.

2. Kabelhalter nach dem Anspruch 1, **dadurch gekennzeichnet, daß** dieser zusätzlich zu 10 bis 30 Masse-% Glasfasern enthält.

3. Kabelhalter nach einem der voranstehenden Ansprüche, **dadurch gekennzeichnet, daß** die Breite des Kabelhalters (1) zwischen 42 und 48 mm und die Breite des ersten Abschnitts (11) zwischen 20 und 25 mm beträgt.

4. Kabelhalter nach einem der voranstehenden Ansprüche, **dadurch gekennzeichnet, daß** der erste Abschnitt (11) von dem zweiten Abschnitt (12) durch eine Abstufung (21) übergeht und die Markierungen (16) an der freien Längsseite (19) des zweiten Abschnitts (12) angeordnet sind.

5. Kabelhalter nach dem Anspruch 7, **dadurch gekennzeichnet, daß** der erste Abschnitt (11) winklig zum zweiten Abschnitt (12) angeordnet ist.

6. Kabelhalter nach einem der voranstehenden Ansprüche, **dadurch gekennzeichnet, daß** der zweite Abschnitt (12) mit in regelmäßigen Abständen in Längsrichtung (4) angeordnete Bohrungen (17) zur Befestigung des 2. Abschnitts (12) an eine entsprechende Auflagestelle der Fahrzeugstruktur aufweist.

7. Strukturbauteil mit einem Kabelhalter nach einem der voranstehenden Ansprüche, wobei zumindest der zweite Abschnitt (12) des Kabelhalters (1) mittels eines Zwei-Komponenten-Polyurethan-Elastomer-Klebstoffs auf eine entsprechende Auflagefläche der Fahrzeugstruktur aufgeklebt ist.

## Claims

1. Cable holder for the fastening of cables (10) by means of cable ties (15), which cable holder is formed integrally and has a first section (11) and a second section (12) alongside one another, which each run in the longitudinal direction (4) of the cable holder (1), wherein the first section (11) has slots (13) which run transversely with respect to the longitudinal direction (4) and are arranged parallel to one another, wherein the slots (13) are separated from one another by uniform distances and wherein at least one of the longitudinal faces (18, 19) of the cable holder (1) has markings (16), which are provided at regular intervals, for cutting the cable holder (1) to length,
**characterized**
**in that** the cable holder is formed from polyether ether ketone, in that the slots (13) have a length of between 10 and 18 mm and a width of between 4 and 6 mm, and wherein the distance between the slots (13) is between 7 and 12 mm.

2. Cable holder according to Claim 1, **characterized in that** this cable holder additionally contains up to 10 to 30% by mass of glass fibres.

3. Cable holder according to one of the preceding claims, **characterized in that** the width of the cable holder (1) is between 42 and 48 mm, and the width of the first section (11) is between 20 and 25 mm.

4. Cable holder according to one of the preceding claims, **characterized in that** the first section (11) merges from the second section (12) by means of a step (21), and the markings (16) are arranged on the free longitudinal face (19) of the second section (12).

5. Cable holder according to Claim 7, **characterized in that** the first section (11) is arranged at an angle to the second section (12).

6. Cable holder according to one of the preceding claims, **characterized in that** the second section (12) has holes (17), which are arranged at regular intervals in the longitudinal direction (4), for fastening the second section (12) to a corresponding contact point on the vehicle structure.

7. Structure component having a cable holder according to one of the preceding claims, wherein at least the second section (12) of the cable holder (1) is adhesively bonded by means of a two-component polyurethane-elastomer adhesive to a corresponding contact surface on the vehicle structure.

## Revendications

1. Support de câble destiné à fixer des câbles (10) au moyen de liens de câbles (15), configuré en une seule pièce et présentant l'une à côté de l'autre une première partie (11) et une deuxième partie (12) qui s'étendent chacune dans le sens de la longueur (4) du support de câble (1), la première partie (11) présentant des fentes (13) qui s'étendent transversalement par rapport au sens de la longueur (4) et parallèles les unes aux autres, la distance mutuelle entre les fentes (13) étant constante, et au moins l'un des côtés longitudinaux (18, 19) du support de câble (1) présentant à des intervalles réguliers des repères (16) de découpe à longueur du support de câble (1),
**caractérisé en ce que**
le support de câble est formé en polyétheréthercétone et
**en ce que** les fentes (13) ont une longueur comprise entre 10 et 18 mm et une largeur comprise entre 4 et 6 mm la distance entre les fentes (13) étant comprise entre 7 et 12 mm.

2. Support de câble selon la revendication 1, **caractérisé en ce qu'**il contient de plus de 10 à 30 % en poids de fibres de verre.

3. Support de câble selon l'une des revendications précédentes, **caractérisé en ce que** la largeur du support de câble (1) est comprise entre 42 et 48 mm et la largeur de la première partie (11) entre 20 et 25 mm.

4. Support de câble selon l'une des revendications précédentes, **caractérisé en ce que** la première partie (11) se raccorde à la deuxième partie (12) par un gradin (21) et **en ce que** les repères (16) sont disposés sur le côté longitudinal libre (19) de la deuxième partie (12).

5. Support de câble selon la revendication 7, **caractérisé en ce que** la première partie (11) est orientée obliquement par rapport à la deuxième partie (12).

6. Support de câble selon l'une des revendications précédentes, **caractérisé en ce que** la deuxième partie (12) présente des alésages (17) disposés à intervalles réguliers dans le sens de la longueur (4) pour fixer la deuxième partie (12) sur un emplacement de pose approprié de la structure du véhicule.

7. Composant structurel doté d'un support de câble selon l'une des revendications précédentes, dans lequel au moins la deuxième partie (12) du support de câble (1) est collée sur une surface de pose appropriée de la structure du véhicule au moyen d'un adhésif à deux composants, polyuréthane et élastomère.
